# EUROPEAN PATENT SPECIFICATION

(11) **EP 3 482 814 B1**
(45) Date of publication and mention of the grant of the patent: **19.07.2023**
(21) Application number: 18205256.3
(22) Date of filing: 08.11.2018
(51) Int. Cl.: B01D 53/04, B01D 46/24, B01D 46/00, B01D 46/30, F24F 3/16, F24F 13/20, F24F 13/28, F24F 8/158

(54) **AN ACTIVE CARBON FILTER FOR AN AIR VENT ASSEMBLY**
AKTIVKOHLEFILTER FÜR EINE ENTLÜFTUNGSANORDNUNG
FILTRE À CHARBON ACTIF POUR UN ENSEMBLE DE VENTILATION D'AIR

(30) Priority: 09.11.2017 GB 201718514
(43) Date of publication of application: 15.05.2019
(73) Proprietor: Polypipe Limited, Holbeck Leeds LS11 5AE (GB)
(72) Inventor: JENKINS, Richard, Doncaster, South Yorkshire DN12 1ES (GB); ROBERTS, Huw, Doncaster, South Yorkshire DN12 1ES (GB)
(74) Representative: Murgitroyd & Company

(56) References cited:
- CN-U- 205 649 998
- GB-A- 2 534 178
- US-A- 4 216 003
- US-A- 5 080 699

## Description

The present invention relates to an active carbon filter for an air vent assembly.

Residential air handling units are required to remove pollutants from air flow entering a property through an active ventilation system. Air handing units typically include particulate filters for removing PM2.5 and PM10 air born particulate matter. Planning requirements now also require NOx (NO and NO₂) to be filtered from the air supply to the property. A filtration unit arranged to meet these requirements will generally include a large housing containing a coarse pre-filter, particulate filter to treat PM2.5 / PM10 air-born particles, and an activated carbon filter to treat NOx gases.

A typical filter unit for a residential property will be specified to service the ventilation air supply volume for the whole property, at a supply rate of approximately 0.5 air changes per hour. The filter unit is located at the air handling unit and must be sufficiently large in size to be able to filter the entire supply volume and to minimise pressure drop across the filter. In order to minimise pressure drop the size of the unit must be maximised to lower air velocity for a given flow rate. The filter size should also be maximised to ensure an adequate dwell time through the filter.

Residential properties do not typically have sufficient space in a ceiling void to accommodate a large filter unit of this type. Therefore modification is required to create storage room, with a resultant comprise in the space of the property, which is undesirable.

UK Patent Application Number GB1500659.6 describes a solution to this problem in which an active carbon filter is integrated into a diffuser vent. Multiple diffuser vents, each including a separate active carbon filter, are located throughout the property. The use of multiple active carbon filters provided locally within each room, which filter only the air supply to that room, allows the size of each filter unit to be significantly reduced compared to a larger single unit arranged to filter the supply airflow for the whole property. This arrangement provides a more practical filtration solution by treating air only as it is supplied to each room, and is particularly relevant to residential systems where the problems of spatial constraints and the provision of adequate maintenance are most acute. By localising filtration in this manner, the individual filter units may be considerably reduced in size whilst providing equivalent dwell time and pressure loss, making installation more straightforward and keeping energy consumption to a minimum. Maintenance is also considerably less complicated, since access for filter changing will be from the room served, and thus no special access provision are required.

However, reducing in the size of each filter unit requires a reduction in the size of the active carbon filters, which provides challenges in terms of ensuring continued efficacy of the active carbon filter while also ensuring efficiency of the ventilation system. In order to operate effectively the surface area of active carbon across which the air flows should be maximised.

It is known in the prior art to locate active carbon filters within an air duct. Such filters typically comprise a substantially disc shaped cylindrical housing containing active carbon particles. The housing includes perforated circular end walls that spanning the duct. The end walls are axially spaced, with an annular peripheral wall closing the outer edge of the housing. The circular end walls are perforated and particulate active carbon is provided in the void between the end walls. The circular filter is located coaxially within the supply duct of the vent. Any increase in the amount of carbon, and hence the size of the filter, results in a corresponding increase in the pressure drop across the filter. This leads to a loss in efficiency due to the increased fan power required to overcome the pressure drop. An increase in the amount of active carbon also leads to an increase in the size of the filter and of the unit as a whole, which again places a limitation on the amount of carbon that can be used before the unit becomes too large to be accommodated in a standard ceiling void.

US patent number 4126003 describes a gas filter in which flat, active carbon panel filters are mounted within a rectangular housing in an angled v-shaped arrangement. The panel filters narrow to the outlet of the filter and air to flows into the filter via the wider spaced ends of the panels.

It is therefore desirable to provide an improved active carbon filter for an air vent assembly that addresses the above described problems and/or which provides improvements generally.

In an embodiment of the invention there is provided an active carbon filter for an air vent assembly. The filter comprises a cylindrical housing that in use is located within an air supply duct. The housing has a height, a diameter, an inlet end and an outlet end. The housing comprises a perforated outer wall and a perforated inner wall spaced inwardly from the outer wall such that a void is defined between the inner and outer walls. An active carbon material is contained within said void. The diameter of at least the outer wall of the housing tapers from a first diameter at the outlet end to a smaller second diameter at the inlet end such that the outer wall is spaced from the duct along at least part of its length to allow air flowing through the duct to flow into the perforations of the outer wall, across the active carbon material and out of the perforations in the inner wall. The tapered form of the outer wall advantageously increases the exposed surface area of the outer wall within the duct compared to a standard disc shaped filter, thereby increasing the surface area of the active carbon which results in a decrease in the pressure drop across the filter for a given volume of carbon.

The inner wall and outer wall are separate components that are assembled to form the housing. The use of a two part housing enables manufacture of the complex form of the housing. The inner and outer wall are separable once assembled to enable the active carbon material to be removed and replaced.

Preferably the outer wall tapers such that the spacing of the outer wall from the duct increases continuously along its height in the direction of the inlet end.

The diameter of the inner wall tapers from a first diameter at the outlet end to a smaller second diameter at the inlet end. The term diameter means a dimension taken across the filter at an axial position and is not limited to the filter being circular in shape. It is contemplated that the filter may for example be square or rectangular in cross section for combination with a square or rectangular duct.

The outer wall includes an outer part and an inner part arranged radially inwards of the outer part. The inner part extends in the return direction to the outer part, extending from the inlet end of the outer part towards the outlet end.

The outer part of the outer wall tapers radially inwardly in the direction of the inlet end and the inner part tapers radially inwards in the opposing direction towards the outlet end. The term 'taper' is used to mean a continuous reduction in diameter along a given length.

The inner wall includes an outer part and an inner part arranged radially inwards of the outer part, the inner part extending from the inlet end of the outer part towards the outlet end

The outer part of the inner wall tapers radially inwardly in the direction of the inlet end and the inner part tapers radially inwards in the opposing direction towards the outlet end. The taper of the outer wall allows airflow around the outer wall. The inward taper of the inner part also promotes airflow through the inner part and allows the inner and outer walls to more effectively nest.

An inner volume is defined within the outer wall, and the reference to the inner wall being spaced 'inwardly' of the outer wall means inwardly into the inner volume of outer wall. The outer part of the inner wall is preferably spaced radially inwards of the outer part of the outer wall and the inner part of the inner wall is spaced radially outwards of the inner part of the outer wall.

The inner part of the outer wall preferably defines a hollow inlet core section that is closed at the outlet end and has an inlet opening at the inlet end arranged such that air is able to flow into the hollow inlet core section through the inlet opening and into the housing through the inner part of the outer wall. The hollow core section extends axially within the outer part.

The outer part of the inner wall defines a hollow core that is closed at the inlet end and has an outlet opening at the outlet end arranged such that air flowing into the housing through the inner and outer parts of the outer wall flows into the hollow outlet core section through the inner wall and exits the housing via the outlet opening.

The tapered inner part of the inner wall extends into the hollow outlet core in the direction of the outlet end. The housing has an inner part and an outer part and the inner part extends and tapers in the axially opposite direction to the outer part. The inner part of the housing is defined by the inner parts of the inner and outer wall, and the outer part is defined by the outer parts of the inner and outer walls.

The inner wall and outer wall are separately formed components with the inner wall being arranged to be inserted within and connected to the outer wall during assembly.

At least one of the inner wall and outer wall includes one or more radially extending spacer members arranged to hold and fix the inner wall in a spaced arrangement relative to the outer wall.

The outer wall preferably includes an end wall section at the inlet end that extends between the outer and inner parts of the outer wall and closes the void within the housing at the inlet end. The end wall preferably includes perforations.

At least one of the inner wall and outer wall may include one or more filling apertures greater in size than the perforations and arranged to enable the void to be filled with the active carbon material.

The filling apertures are preferably formed in the inlet end wall. Closure means may be provided for closing the filling apertures, which may be adhesive tabs, stopper members, caps or any other suitable closure means.

The filter assembly may include both an active carbon filter and a particulate filter, enabling the vent assembly to satisfy planning requirements in a single solution product.

In another aspect of the invention there is provided a vent assembly comprising a supply duct having an inlet end and an outlet end; a diffuser located at the outlet end of the supply duct; and an active carbon filter in accordance with the above.

The duct may have an inner wall and the inlet end of the outer wall of the housing of the active carbon filter is radially spaced from the inner wall of the duct.

The diameter of the outlet end of the outer wall of the active carbon filter is substantially equal to the diameter of the duct.

The present invention will now be described by way of example only with reference to the following illustrative figure in which:
Figure 1 shows a vent assembly according to an embodiment of the invention;
Figure 2 shows a cross section of a filter according to an embodiment of the invention;
Figure 3 shows an exploded view of the filter of Figure 2; and
Figure 4 shows a filter according to another embodiment of the invention.

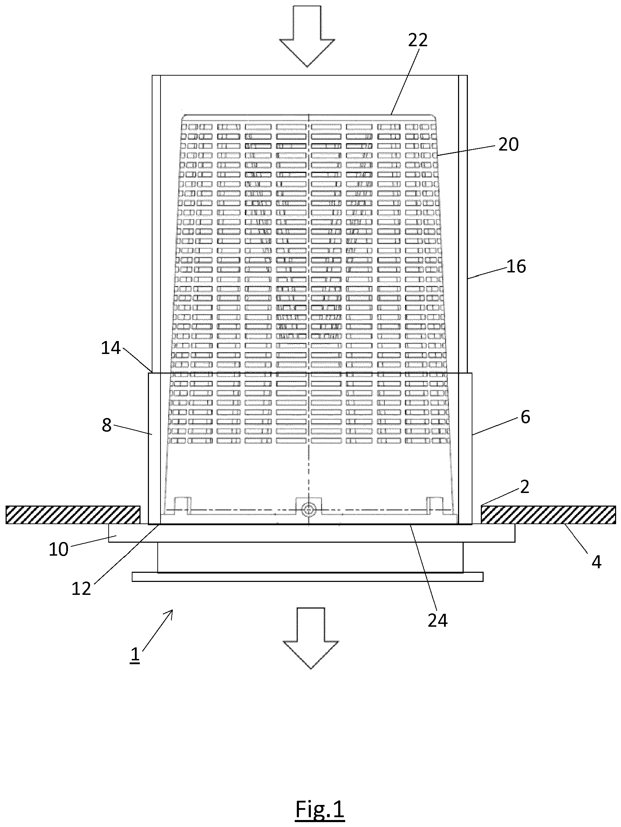

Referring to Figure 1, a ventilation system for ventilation of a residential property comprises a plurality of air inlets supplying air from the external atmosphere. At least one fan unit (not shown) is provided for supplying air to the air supply inlet. The outlet of the supply fan is connected to a network of supply ducting. A series of air vents 1 are connected along the supply ducting network, with typically an air vent 1 being provided in each habitable room of the property to supply air thereto.

An aperture 2 is formed in a ceiling 4 of a room. The air vent 1, otherwise referred to as a terminal unit, is secured within the aperture 2. The air vent 1 includes a main body 6 comprising a primary conduit 8 that lines the aperture 2 and extends into the ceiling void. The main body preferably includes a flange plate 10 that surrounds the aperture for securing the vent 1 to the ceiling 4. The primary conduit 8 includes a supply opening 12 defining a supply inlet to the room. The opposing end 14 is connected to a supply ducting section 16, which is connected to the main supply duct of the ventilation system. The primary conduit 8 and supply ducting section 16 are contiguous and combine to define the supply duct along their length. A diffuser is connected to the main body 6 and located at the opening of the supply inlet 12 to direct airflow exiting the supply inlet 12 into the room.

The vent assembly is provided with an active carbon filter 20 for removing NOx from the air supply. The filter 20 is located within the supply ducting 16 such that the air supply from the ducting 16 to the outlet opening 12 flows through the filter 20. The filter 20 includes an inlet end 22 and an outlet end 24. The filter 20 is connected at its outlet end 24 to the body 6 of the vent 1 which supports and retains the filter 20 within the ducting 16.

The filter 20 comprises a housing containing an active carbon particulate material 28. The housing includes an outer wall 30 and an inner wall 32. The outer wall 30 covers and encloses the inner wall 32 in the direction A of the airflow through the filter. The outer wall 30 includes an outer part 34 and an inner part 36. The outer part 34 has a substantially frusto conical shape that is truncated at the inlet end 22. The diameter of the outer part 34 tapers from a first diameter d1 at the outlet end 24 to a smaller second diameter d2 at the inlet end 22. The diameter d1 is substantially equal to the diameter of the primary conduit 8, with the base of the filter 20 connecting to the vent body 6 such that the airflow is prevented between the outer wall 30 and the primary conduit 8 at the base of the outer wall The second diameter d2 is less than the first diameter such that the inlet end 22 is radially spaced from the duct 16. Air is therefore able to flow between the outer wall 30 and the duct 16 as far as the base of the filter 20.

The inner part 36 of the outer wall 30 is spaced radially inwards from the outer part 34 and is connected to the outer part 34 by an end wall section 38 arranged orthogonally to the axis of the filter 20. The inner part 36 is also frusto conical in shape. The inner part 36 tapers in the opposing direction to the outer part 34 in the direction of the outlet end 24 and is truncated at its outlet end. The inner part 36 tapers from a diameter d4 at its inlet end to a diameter d5 at its outlet end. The inner part 36 defines a hollow chamber 40 having an opening 39 at its inlet end. The chamber 40 is closed at the outlet end by end wall section 42.

The inner wall 32 has a complementary shape corresponding to the shape of the outer wall 30 configured such that the inner wall 32 nests within the outer wall 30 in a spaced relationship. The inner wall 32 has an outer part 44 and an inner part 46. The outer part 44 has a substantially frusto conical shape that is truncated at the inlet end. The diameter of the outer part 44 tapers from a diameter d6 at the outlet end 24 to a smaller second diameter d7 at the inlet end. The outer part 44 tapers in such a way that it is parallel to and spaced from the outer part 34 of the outer wall 30 along its entire length.

The inner part 46 of the inner wall 32 is spaced radially inwards from the outer part 44. The inner part 46 is also frusto conical in shape. The inner part 46 tapers in the opposing direction to the outer part 34 in the direction of the outlet end 24 and is truncated at its outlet end by end wall 47. The change in direction of the inner wall 32 between the outer part 44 and inner part 46 creates a return edge that defines a circular rim 48 at the inlet end. The inner part 46 tapers from a diameter d7 at the rim 48 to a diameter d8 at its outlet end.

The outer part 44 of the inner wall 32 has a hollow core defining an inner chamber 45. The inner chamber 45 has an opening^ at the outlet end and is closed at the inlet end by the inner part 46 of the inner wall 32. The inner part 46 of the inner wall 32 extends axially into the inner chamber 45 from the inlet end and is spaced radially inwards of the outer part 44. The inner wall 32 is spaced from the outer wall 30. The outer part 44 of the inner wall 32 is spaced radially inward of the outer part 34 of the outer wall 30 and the inner part of the inner wall 32 is spaced radially outwards of the inner part 36 of the outer wall 30. The spacing between the inner wall 32 and outer wall 30 defines a void 50 having a width t1. The inner wall 32 is nested within the outer wall 30 such that the spacing therebetween, and hence the width t1 of the void 50 is substantially constant. The void extends around the outer periphery of the inner part 44 and outer part 42 of the inner wall 32.

The base 52 of the inner wall 32 includes a flange 54 projecting radially outwards. The flange 54 extends between the inner wall 32 and outer wall 30 and forms an end wall that closes the void such that the inner wall 32 and outer wall 30 form a fully contained enclosure. The void 50 is filled with the active carbon material 28 which is contained within the enclosure formed by the housing.

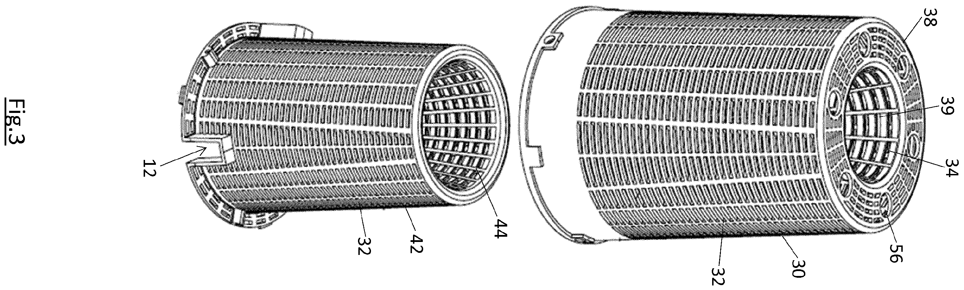

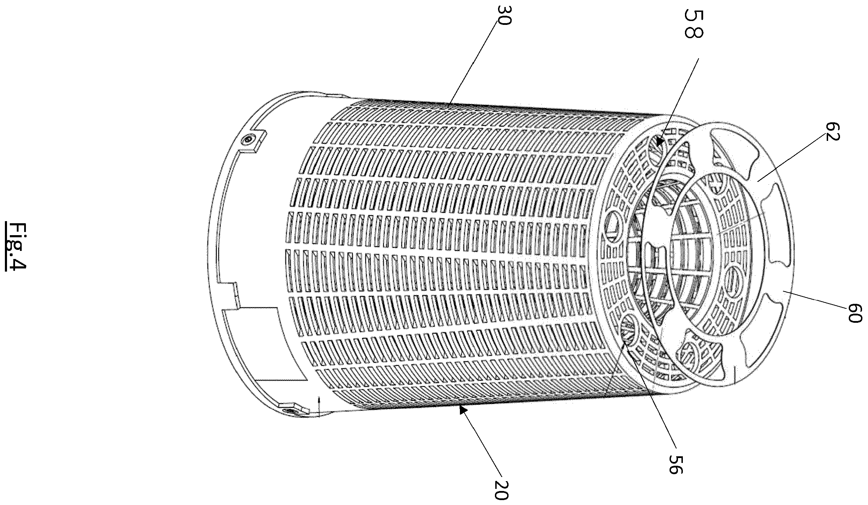

As shown in Figure 3, the outer wall 30 and inner wall 32 are perforated by a plurality of apertures 56. The apertures 56 are arranged in axially extending columns along the inner wall 32 and outer wall 30, and extend through the inner part and outer part of both the inner wall 32 and outer wall 30 and the end wall 38. The apertures 56 are elongate in shape having a width selected to be less than the smallest diameter of the active carbon particulate material 28, such that the particulate matter is unable to pass through the apertures. The length of the apertures or slits 28 is greater than their width to optimise airflow through the apertures. A plurality of filling apertures 58 are formed in the inlet end wall 38. The filling apertures 58 are sized to receive the particulate material, to fill the void 50. The filling apertures are arranged in a spaced annular array around the annular end wall 38. As shown in Figure 4 an adhesive cover strip 60 is provided to cover and close the filling apertures 56 when the void 50 has been filled. The cover strip 60 includes substantially circular panels 62 supported by inner and outer circular bands, the panels 62 being arranged to adhere over and around the filling apertures.

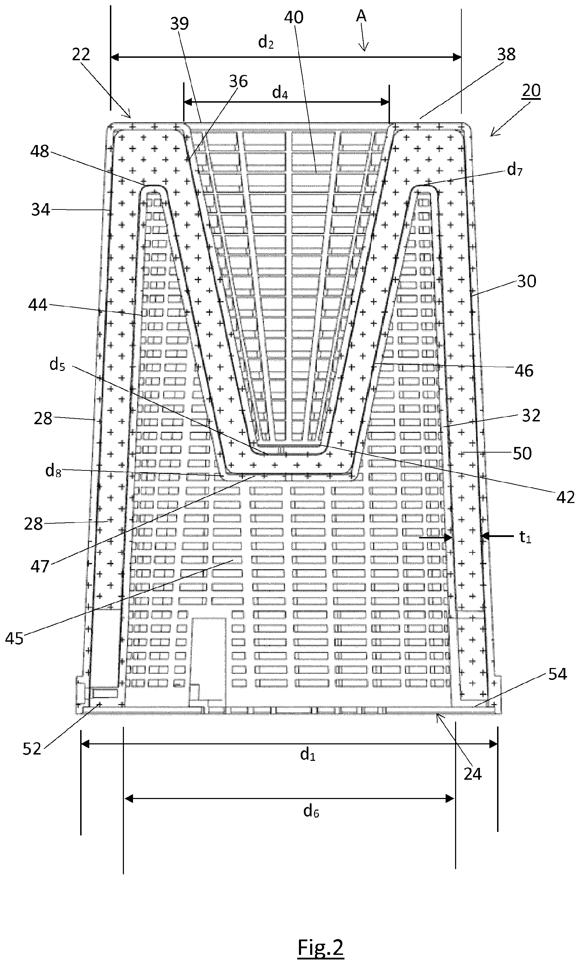

Referring again to Figure 2, when the filter 20 is inserted in the duct 16 in use, the filter 20 blocks airflow through the duct such that all airflow to the outlet 12 is forced to pass through the filter 20. Part of the air flowing through the duct 16 in the direction of the outlet 12 flows into the space between the outer part 34 of the outer wall 30 and the duct 16. Air flowing into this region then flows into the apertures 56 in the outer part 34 of the outer wall 30 and into the void 50. The air flows through the void 50 and across the active carbon particulate material 28, which filters the NOx pollutants from the air. The air then flows into the inner chamber 45 through the outer part 44 of the inner wall 32, and then exits into the habitable room through the vent 1. Another part of the air flowing through the duct 16 flows into the frusto conical chamber 40 defined within the inner part 46 of the outer wall through the opening 39. Air within the chamber 40 flows into the void 50 through the apertures 56 in the inner part 36 of the outer wall 30. The air flows through the void 50 and across the active carbon particulate material 28, which filters the NOx pollutants from the air. The air then flows through the frusto conical inner part 46 of the inner wall 32 into the inner chamber 45 and then exits through the outlet 12.

The frusto conical shape of the outer part of the filter housing 26 and the return frusto cone of the inner part forms a housing having a substantially M-shaped cross section. This shape significantly increases the surface area of the filter housing within the duct, and hence the surface area of the active carbon for a given duct diameter. Increasing the surface area of the active carbon material in this way significantly decreases the pressure drop across the filter for a given volume of active carbon material. In addition, by returning the frusto cone of the inner part within the outer part, the height of the filter is minimised while still maximising surface area. The filter is therefore able to be accommodated within a ceiling void without requiring the ceiling void to be enlarged, such as by creating a suspended ceiling. The filter therefore increases the efficacy of the active carbon filter, improves efficiency of the ventilation system and extends the maintenance life cycle of the filter by allowing increased carbon volume.

## Claims

1. An active carbon filter for an air vent assembly comprising:
a cylindrical housing that in use is located coaxially within an air supply duct, the housing (26) having a height, a diameter, an inlet end (22) and an outlet end (24), the housing comprising an outer part having a frusto conical shape and comprising a perforated outer wall (34) and a perforated inner wall (44) spaced from the outer wall (34) such that a void is defined between the inner (44) and outer (34) walls (34)(44), the inner wall (44) having a complementary shape corresponding to the shape of the outer wall (34) such it nests within the outer wall (34) in a spaced relationship, and the inner part of the housing having a frusto conical shape and comprising an inner wall (36) and an outer wall (46), the inner part being arranged radially inwards of the outer part such that it extends within the outer part from the inlet end (22) of the outer part towards the outlet end (24) of the outer part; and
an active carbon material (28) contained within the void of the outer part;
wherein the diameter of at least the outer wall (34) of the frusto conical outer part of the housing tapers in the direction of the inlet end (22) from a first diameter at the outlet end (24) to a smaller diameter at the inlet end (22) such that the outer wall (34) is increasingly spaced from the duct along its height in the direction of the inlet end (22) when located within the duct to allow air flowing through the duct from the inlet end (22) to flow into the perforations of the outer wall (34), across the active carbon material (28) and out of the perforations in the inner wall (44), and the inner part tapers radially inwards in the opposing direction to the outer part towards the outlet end (24) of the outer part.

2. An active carbon filter according to claim 1 wherein the inner wall (36) of the inner part defines a hollow inlet core section that is closed at the outlet end and has an inlet opening at the inlet end (22) arranged such that air is able to flow into the hollow inlet core section through the inlet opening and into the housing (26) through the inner wall (36)of the inner part.

3. An active carbon filter according to claim 2 wherein the outer wall (46) of the inner part and the inner wall (44) of the outer part define a hollow core that is closed at the inlet end and has an outlet opening at the outlet end (24) arranged such that air flowing into the housing through the outer wall (34) of the outer part and inner wall (36) of the inner part flows into the hollow outlet core section through the outer wall (46) of the inner part and the inner wall (44) of the outer part and exits the housing via the outlet opening.

4. An active carbon filter according to claim 3 wherein at least one of the inner wall (44) and outer wall (34) includes one or more spacer members arranged to hold the inner wall (44) in a spaced arrangement relative to the outer wall (34).

5. An active carbon filter according to claim 4 wherein an end wall section located at the inlet end (22) extends between the outer wall (34) of the outer part and inner wall (36) of the inner part and closes the void within the housing at the inlet end (22).

6. An active carbon filter according to claim 5 wherein at least one of the inner part and outer part includes one or more filling apertures (56) greater in size than the perforations and arranged to enable the void to be filled with the active carbon material.

7. An active carbon filter according to claim 6 wherein the filling apertures (56) are formed in the inlet end wall.

8. An active carbon filter according to claim 6 or 7 further comprising closure means for closing the filling apertures (56).

9. A vent assembly comprising:
a supply duct (16) having an inlet end and an outlet end;
a diffuser (18) located at the outlet end of the supply duct; and
an active carbon filter (20) according to any preceding claim connected to the diffuser at its outlet end with the inlet end extending axially into the duct.

10. A vent assembly according to claim 9 wherein the supply duct (16) has an inner wall and the inlet end of the outer wall (34) of the housing of the active carbon filter (20) is radially spaced from the inner wall of the duct.

11. A vent assembly according to claim 10 wherein the diameter of the outlet end of the outer wall (34) of the active carbon filter is substantially equal to the diameter of the supply duct (16).

## Patentansprüche

1. Ein Aktivkohlefilter für eine Luftentlüftungsanordnung, der Folgendes beinhaltet:
ein zylindrisches Gehäuse, das sich bei Verwendung koaxial innerhalb eines Luftzuführungskanals befindet, wobei das Gehäuse (26) eine Höhe, einen Durchmesser, eine Eintrittsseite (22) und eine Austrittsseite (24) aufweist, wobei das Gehäuse einen Außenteil beinhaltet, der eine Kegelstumpfform aufweist und eine perforierte äußere Wand (34) und eine perforierte innere Wand (44), die von der äußeren Wand (34) beabstandet ist, beinhaltet, sodass ein Hohlraum zwischen der inneren (44) Wand und der äußeren (34) Wand (34) (44) definiert ist, wobei die innere Wand (44) eine komplementäre Form aufweist, die der Form der äußeren Wand (34) entspricht, sodass sie in einer beabstandeten Beziehung innerhalb der äußeren Wand (34) eingesetzt ist, und der Innenteil des Gehäuses eine Kegelstumpfform aufweist und eine innere Wand (36) und eine äußere Wand (46) beinhaltet, wobei der Innenteil radial einwärts von dem Außenteil eingerichtet ist, sodass er sich innerhalb des Außenteils von der Eintrittsseite (22) des Außenteils in Richtung der Austrittsseite (24) des Außenteils erstreckt; und
ein Aktivkohlematerial (28), das innerhalb des Hohlraums des Außenteils enthalten ist; wobei sich der Durchmesser von mindestens der äußeren Wand (34) des kegelstumpfförmigen Außenteils des Gehäuses in Richtung der Eintrittsseite (22) von einem ersten Durchmesser an der Austrittsseite (24) auf einen kleineren Durchmesser an der Eintrittsseite (22) verjüngt, sodass die äußere Wand (34) entlang ihrer Höhe in Richtung der Eintrittsseite (22) von dem Kanal zunehmend beabstandet ist, wenn sie sich innerhalb des Kanals befindet, um zu ermöglichen, dass Luft, die von der Eintrittsseite (22) durch den Kanal strömt, in die Perforationen der äußeren Wand (34), über das Aktivkohlematerial (28) und aus den Perforationen in der inneren Wand (44) strömt, und sich der Innenteil radial einwärts in die entgegengesetzte Richtung zu dem Außenteil in Richtung der Austrittsseite (24) des Außenteils verjüngt.

2. Aktivkohlefilter gemäß Anspruch 1, wobei die innere Wand (36) des Innenteils einen hohlen Eintrittskernabschnitt definiert, der an der Austrittsseite geschlossen ist und eine Eintrittsöffnung an der Eintrittsseite (22) aufweist, die eingerichtet ist, sodass Luft in der Lage ist, durch die Eintrittsöffnung in den hohlen Eintrittskernabschnitt und durch die innere Wand (36) des Innenteils in das Gehäuse (26) zu strömen.

3. Aktivkohlefilter gemäß Anspruch 2, wobei die äußere Wand (46) des Innenteils und die innere Wand (44) des Außenteils einen hohlen Kern definieren, der an der Eintrittsseite geschlossen ist und eine Austrittsöffnung an der Austrittsseite (24) aufweist, die eingerichtet ist, sodass Luft, die durch die äußere Wand (34) des Außenteils und die innere Wand (36) des Innenteils in das Gehäuse strömt, durch die äußere Wand (46) des Innenteils und die innere Wand (44) des Außenteils in den hohlen Austrittskernabschnitt strömt und über die Austrittsöffnung aus dem Gehäuse austritt.

4. Aktivkohlefilter gemäß Anspruch 3, wobei mindestens eine der inneren Wand (44) und äußeren Wand (34) ein oder mehrere Abstandshalterelemente umfasst, die eingerichtet sind, um die innere Wand (44) relativ zu der äußeren Wand (34) in einer beabstandeten Einrichtung zu halten.

5. Aktivkohlefilter gemäß Anspruch 4, wobei sich ein Endwandabschnitt, der sich an der Eintrittsseite (22) befindet, zwischen der äußeren Wand (34) des Außenteils und der inneren Wand (36) des Innenteils erstreckt und den Hohlraum innerhalb des Gehäuses an der Eintrittsseite (22) verschließt.

6. Aktivkohlefilter gemäß Anspruch 5, wobei mindestens einer des Innenteils und des Außenteils eine oder mehrere Füllungsöffnungen (56) umfasst, die größere Abmessungen als die Perforationen haben und eingerichtet sind, um zu ermöglichen, dass der Hohlraum mit dem Aktivkohlematerial gefüllt wird.

7. Aktivkohlefilter gemäß Anspruch 6, wobei die Füllungsöffnungen (56) in der Eintrittsseitenwand gebildet sind.

8. Aktivkohlefilter gemäß Anspruch 6 oder 7, der ferner ein Verschlussmittel zum Verschließen der Füllungsöffnungen (56) beinhaltet.

9. Eine Entlüftungsanordnung, die Folgendes beinhaltet:
einen Zuführungskanal (16), der eine Eintrittsseite und eine Austrittsseite aufweist;
einen Diffusor (18), der sich an der Austrittsseite des Zuführungskanals befindet; und
einen Aktivkohlefilter (20) gemäß einem der vorhergehenden Ansprüche, der an seiner Austrittsseite mit dem Diffusor verbunden ist, wobei sich die Eintrittsseite axial in den Kanal erstreckt.

10. Entlüftungsanordnung gemäß Anspruch 9, wobei der Zuführungskanal (16) eine innere Wand aufweist und die Eintrittsseite der äußeren Wand (34) des Gehäuses des Aktivkohlefilters (20) von der inneren Wand des Kanals radial beabstandet ist.

11. Entlüftungsanordnung gemäß Anspruch 10, wobei der Durchmesser der Austrittsseite der äußeren Wand (34) des Aktivkohlefilters dem Durchmesser des Zuführungskanals (16) im Wesentlichen gleicht.

## Revendications

1. Un filtre à charbon actif pour un ensemble de ventilation d'air comprenant :
un boîtier cylindrique qui, en cours d'utilisation, est situé coaxialement au sein d'un conduit d'amenée d'air, le boîtier (26) ayant une hauteur, un diamètre, une extrémité d'entrée (22) et une extrémité de sortie (24), le boîtier comprenant une partie externe ayant une forme tronconique et comprenant une paroi externe perforée (34) et une paroi interne perforée (44) espacée de la paroi externe (34) de telle sorte qu'un vide soit défini entre les parois (34) (44) interne (44) et externe (34), la paroi interne (44) ayant une forme complémentaire correspondant à la forme de la paroi externe (34) de telle sorte qu'elle se niche au sein de la paroi externe (34) dans une relation espacée, et la partie interne du boîtier ayant une forme tronconique et comprenant une paroi interne (36) et une paroi externe (46), la partie interne étant agencée radialement vers l'intérieur de la partie externe de telle sorte qu'elle s'étende au sein de la partie externe depuis l'extrémité d'entrée (22) de la partie externe vers l'extrémité de sortie (24) de la partie externe ; et
un matériau de charbon actif (28) contenu au sein du vide de la partie externe ;
dans lequel le diamètre d'au moins la paroi externe (34) de la partie externe tronconique du boîtier s'effile dans la direction de l'extrémité d'entrée (22) d'un premier diamètre à l'extrémité de sortie (24) à un diamètre plus petit à l'extrémité d'entrée (22) de telle sorte que la paroi externe (34) soit espacée de manière croissante à partir du conduit le long de sa hauteur dans la direction de l'extrémité d'entrée (22) lorsqu'elle est située au sein du conduit afin de permettre à de l'air s'écoulant par le conduit à partir de l'extrémité d'entrée (22) de s'écouler jusque dans les perforations de la paroi externe (34), à travers le matériau de charbon actif (28) et en dehors des perforations dans la paroi interne (44), et la partie interne s'effile radialement vers l'intérieur dans la direction opposée jusqu'à la partie externe vers l'extrémité de sortie (24) de la partie externe.

2. Un filtre à charbon actif selon la revendication 1 dans lequel la paroi interne (36) de la partie interne définit une section de coeur d'entrée creuse qui est obturée à l'extrémité de sortie et a une ouverture d'entrée à l'extrémité d'entrée (22) agencée de telle sorte que de l'air soit apte à s'écouler jusque dans la section de coeur d'entrée creuse par l'ouverture d'entrée et jusque dans le boîtier (26) à travers la paroi interne (36) de la partie interne.

3. Un filtre à charbon actif selon la revendication 2 dans lequel la paroi externe (46) de la partie interne et la paroi interne (44) de la partie externe définissent un coeur creux qui est obturé à l'extrémité d'entrée et a une ouverture de sortie à l'extrémité de sortie (24) agencée de telle sorte que de l'air s'écoulant jusque dans le boîtier à travers la paroi externe (34) de la partie externe et la paroi interne (36) de la partie interne s'écoule jusque dans la section de coeur de sortie creuse à travers la paroi externe (46) de la partie interne et la paroi interne (44) de la partie externe et sorte du boîtier par l'intermédiaire de l'ouverture de sortie.

4. Un filtre à charbon actif selon la revendication 3 dans lequel au moins une paroi parmi la paroi interne (44) et la paroi externe (34) inclut un ou plusieurs organes d'espacement agencés afin de maintenir la paroi interne (44) dans un agencement espacé par rapport à la paroi externe (34).

5. Un filtre à charbon actif selon la revendication 4 dans lequel une section de paroi d'extrémité située à l'extrémité d'entrée (22) s'étend entre la paroi externe (34) de la partie externe et la paroi interne (36) de la partie interne et obture le vide au sein du boîtier à l'extrémité d'entrée (22).

6. Un filtre à charbon actif selon la revendication 5 dans lequel au moins une partie parmi la partie interne et la partie externe inclut un ou plusieurs orifices de remplissage (56) de dimension supérieure à celle des perforations et agencés afin de permettre au vide d'être rempli avec le matériau de charbon actif.

7. Un filtre à charbon actif selon la revendication 6 dans lequel les orifices de remplissage (56) sont formés dans la paroi d'extrémité d'entrée.

8. Un filtre à charbon actif selon la revendication 6 ou la revendication 7 comprenant en outre des moyens d'obturation pour obturer les orifices de remplissage (56).

9. Un ensemble de ventilation comprenant :
un conduit d'amenée (16) ayant une extrémité d'entrée et une extrémité de sortie ;
un diffuseur (18) situé à l'extrémité de sortie du conduit d'amenée ; et
un filtre à charbon actif (20) selon n'importe quelle revendication précédente raccordé au diffuseur à son extrémité de sortie, l'extrémité d'entrée s'étendant axialement jusque dans le conduit.

10. Un ensemble de ventilation selon la revendication 9 dans lequel le conduit d'amenée (16) a une paroi interne et l'extrémité d'entrée de la paroi externe (34) du boîtier du filtre à charbon actif (20) est radialement espacée de la paroi interne du conduit.

11. Un ensemble de ventilation selon la revendication 10 dans lequel le diamètre de l'extrémité de sortie de la paroi externe (34) du filtre à charbon actif est substantiellement égal au diamètre du conduit d'amenée (16).
